Europäisches Patentamt

European Patent Office

Office européen des brevets

(11) Publication number: **0 434 191 A2**

# EUROPEAN PATENT APPLICATION

(21) Application number: 90311283.7

(22) Date of filing: 16.10.90

(51) Int. Cl.5: **G01S 17/36**

(30) Priority: 20.12.89 GB 8928714

(43) Date of publication of application:
26.06.91 Bulletin 91/26

(84) Designated Contracting States:
BE DE FR IT

(71) Applicant: **HUNTING ENGINEERING LIMITED**
**Reddings Wood Ampthill**
**Bedfordshire MK45 2HD(GB)**

(72) Inventor: **Allen, David John**
**74 Salisbury Street**
**Bedford, MK41 7RG(GB)**

(74) Representative: **Horton, Andrew Robert Grant**
**et al**
**BOWLES HORTON Felden House Dower**
**Mews High Street**
**Berkhamsted Hertfordshire HP4 2BL(GB)**

(54) Electro-optical ranging systems.

(57) A range finder system for use at short ranges comprises a source (10) of substantially monochromatic light, the source being capable of modulation by a a modulator (11). Light from the source is directed at a target and backscattered to a detector (18). A signal processing path from the detector to the modulator completes a closed regenerative loop. Means (21,30) are provided for detecting the frequency of oscillation of the closed regenerative loop.

FIG.2

EP 0 434 191 A2

## ELECTRO-OPTICAL RANGING SYSTEMS

Background of the Invention

This invention relates to electro-optical systems for use in determining the range of a target, such as a surface of interest, from a measurement datum.

It is known to control the focus of an imaging lens or reflector system by signals derived by analysis of the contrast or spatial frequency content of the image. In this way, the focal setting of the previously calibrated lens may be used to provide average range information for a scene of interest. Such a system is of a limited utility, for several reasons. The content of the scene may be unsuitable for spatial frequency resolution. The short depth of field required for accurate ranging may be unacceptably compromised in imaging applications. The transient measurement response is limited by the mechanical servo systems required. The system cannot readily produce range data for separate objects in a field or discriminate between objects of similar range.

It is also known to use the time of propagation of a laser pulse to and from a reflecting object to provide range information in a manner essentially similar to that of radar systems. It is known however that a reflected or back scattered pulse is normally significantly distorted so that the measurement of range, which depends critically on the comparison of the time interval between particular phases of the transmitted pulse and the received pulse, is subject to error. For measurement of substantial ranges, such an error can be tolerated, but for measurements at comparatively close range, such as for example a few metres or tens of metres, the distortion of the reflected pulse is liable to produce an error which approaches in order of magnitude the time which is to be measured.

Summary of the Invention

The present invention is primarily though not exclusively intended for use in measurement of range where the range is up to a few metres or tens of metres. It is particularly though not exclusively intended for use where the order of magnitude of the range is known in advance so that the measuring apparatus can be preconditioned to measure range within preset limits. As will be seen, a range gate in the present invention may be constituted by a frequency selective filter.

The basis of the present invention is a system in which a laser or other substantially monochromatic optical generator, which is capable of modulation, is associated with an optical system which directs laser light at a target and includes a detector for light that scatters from the target. The output of the detector is passed through a band selective means and applied regeneratively, that is to say in the sense of positive feedback, to modulate the laser. The system thereby constitutes a closed regenerative loop including the laser; the loop is oscillatory at the modulating frequency.

The phase change at the modulating frequency from the laser to the detector via the target may be substantially equal to at least one, and preferably only one, complete cycle. This requires substantially an absence of phase inversion in the processing of the received signal. An alternative possibility is for the phase change at the modulating frequency from the laser to the detector to be an odd number (preferably unity) of half cycles. In this case the processing needs to include a further 180 degrees of phase shift.

By monitoring the oscillatory frequency in the loop at some convenient point, such as in the signal path between the detector and the modulator for the laser, a determination of range may be made.

In either case the signal path from the point of detection of the light to the modulated source (the laser) will normally introduce delay, which is in general dependent on the loop oscillation frequency and the gain in that path. The system may readily be calibrated to provide compensation for such delay.

The laser is preferably a continuous wave laser. The operation of the system need not be continuous provided that the closed loop has sufficient time to achieve a state suitable for measurement of range.

In order to avoid the production of undesirable modes and to avoid unnecessary ambiguity, it is desirable to provide a range gate in the form of a band selective filter. The use of such a filter is desirable at least to prevent oscillation at, for example, a frequency at which there is a multiplicity of complete cycles of phase change in the closed loop.

Brief Description of the drawings

Figure 1 illustrates schematically and in general terms a range measuring system according to the invention.

Figure 2 illustrates schematically one embodiment of the invention.

Figure 3 illustrates schematically another embodiment of the invention.

Figure 4 is a histogram.

## Description of the preferred embodiments

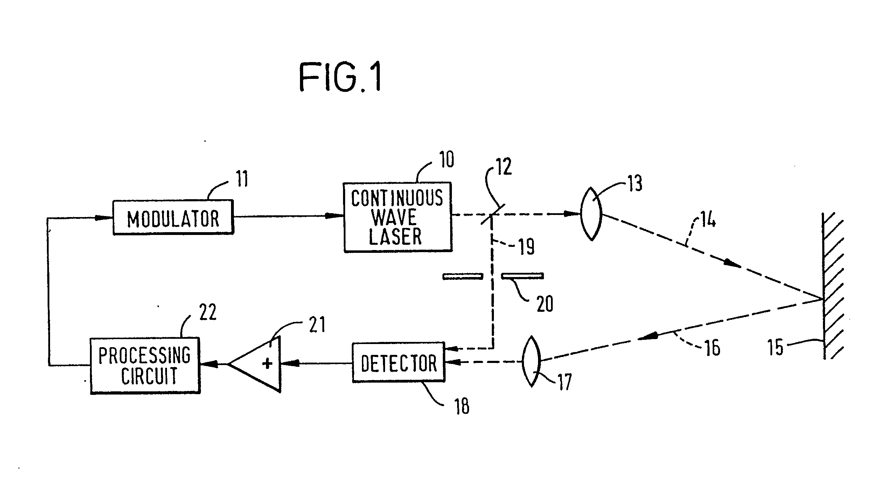

The system shown in Figure 1 includes a laser 10, preferably a laser capable of producing a continuous wave output. The amplitude or frequency of the laser output may be altered by means of a modulator 11. For convenience this is shown separately in the drawing. The laser may include its own means of modulation which may consist of the alteration of a refractive index within the laser cavity by adjustment of an applied electric field. The electric field would in such an example be modulated at a frequency of the order of several hundred MHz where the system is used for the measurement of range of the order of a few metres.

The light from the laser is passed through a beam splitter 12, such as a half-silvered mirror, and thence through an optical system represented by a lens 13 to provide a focused beam 14 that is directed towards a target, represented by a surface 15. Light 16 backscattered from the target passes through part of the optical system, as represented by lens 17, to be received by a demodulator or detector 18.

It is convenient for a variety of purposes to be able to provide light directly from the laser to the detector 18 and accordingly the beam splitter provides reference light 19 which can be received by the detector when a suitable control means, such as a shutter 20, is operated. The reference light may be used for the extraction of the modulating signal and/or to provide a signal which indicates zero range.

The output of the detector is passed through a non-inverting amplifier 21 and through a processing circuit 22 to provide an input to the modulating means represented by the modulator 11.

As noted in the foregoing, the system is arranged so that the laser, the path of the optical beam, the detector and the path back to the laser form a closed regenerative loop which will oscillate, and modulate the laser light at a frequency such that there is at least a complete cycle of phase change at that frequency in the loop.

A range of, for example, 10 metres (0.01 kilometres) corresponds to a modulating frequency (assuming 360 degrees of phase shift around the loop) of (approximately) (300,000km/sec)/(0.01km) = 30MHz.

The detector and/or the processing circuit should include some form of frequency selective means that restrict the frequency of oscillation to a selected frequency band, so as to avoid unwanted modes of oscillation and erroneous indications of range.

It is presumed above that there is zero phase shift through the amplifier 21 and the processing circuit 22. In practice, there would be both phase shift and propagation delay, exhibited as a composite phase shift.

Because, in practice, there is a phase shift and a propagation delay in the processing system, i.e. the system extending from the point of detection to the laser, some form of compensation for the phase shift is desirable in order that the oscillatory frequency with which the laser is modulated is properly representative of the range. This may be achieved by means of the shutter 20. In particular, a measurement of the oscillatory frequency may be made using light only from the laser (not reflected from the target). The phase shift and propagation delay exhibited as the composite phase shift will in practice provide a non zero modulating frequency at zero range and this frequency may be used as an offset in the measurement of actual range.

In the foregoing it is assumed that there will be a complete cycle ($2\pi$ radians) of phase shift at the modulating frequency in the path from the laser to the target back to the point of detection. However, an alternative manner of organisation of the system is to provide in place of the non inverting amplifier 21 an inverting amplifier (introducing $\pi$ radians of phase shift) and accordingly organise the system so as to measure the modulating frequency associated with 180 degrees of phase shift at that frequency in the path from the laser to the point of detection by way of the target.

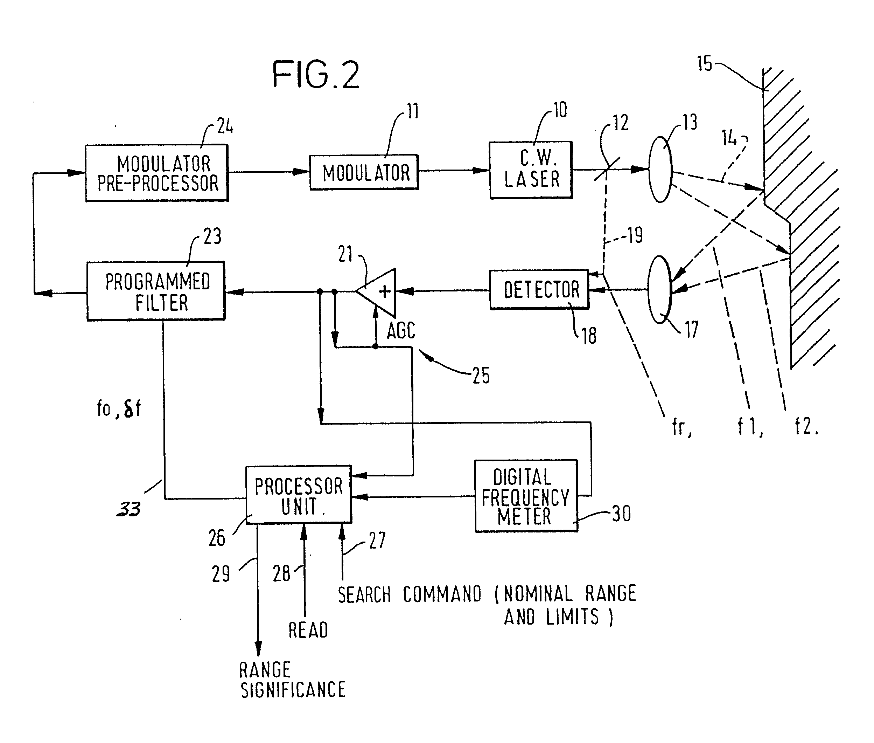

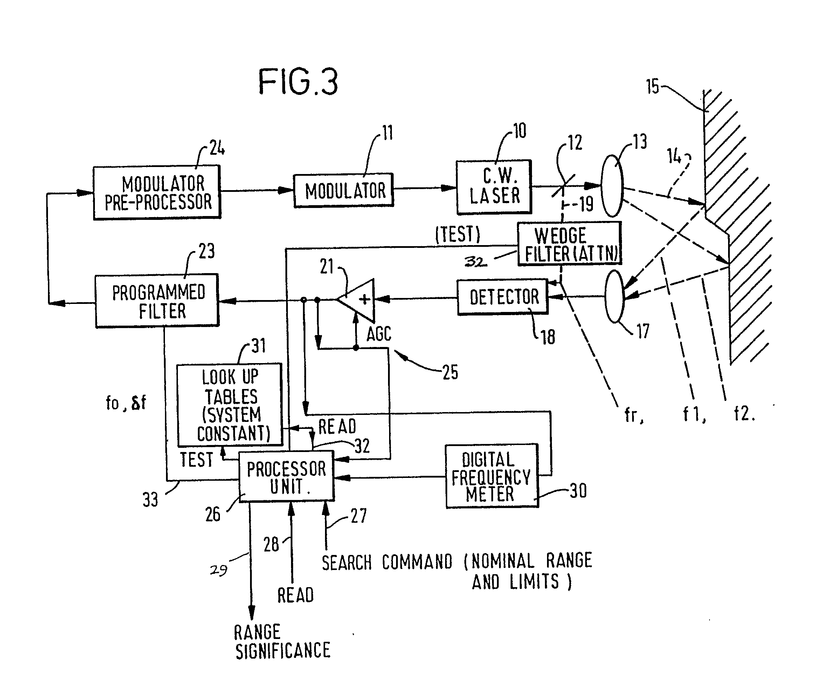

The accompanying Figure 2 illustrates in more detail a typical embodiment of the invention. Figure 3 illustrates a similar system and accordingly only Figure 2 will be described in detail.

The system shown in Figure 2 is basically arranged in the manner of Figure 1, like parts being denoted by like reference numerals.

The output of the detector 18 is passed through a non inverting amplifier 21 and through a processing circuit 22 comprising a programmed filter 23 and a preprocessor 24 for the modulator 11.

The system shown in Figure 2 includes for the amplifier 21 an automatic gain control circuit 25 which may be of known form.

A processor unit 26 has a 'search command' input bus 27, a 'read' input line 28 and an output line 29. The processor unit 26 receives the automatic gain control signal from the AGC circuit 25 and provides an output on a data bus 33 to the programmed filter 23. A digital frequency meter 30 receives the output of the amplifier 21 and provides a further input to the processor.

The organisation of the processor unit 26 and the programmed filter 23 will be readily apparent from the description which follows.

The programmed filter 23 is an analog bandpass filter which operates with a controllable centre frequency fo and a band width $\delta f$ determined by

the control processor 26.

At suitable intervals, a zero range (fr) reference frequency is derived by preventing transmission of the laser to the target and causing the input to the detector to consist only of the reference light 19. Optical switching for this purpose is well known in the art and will not be descibed in any detail.

The target is shown with two different surfaces 15a and 15b which provide on detection modulating frequencies f1 and f2 representing the effective ranges of the surfaces from the laser. The magnitude of the automatic gain control signal provides a measure the significance of the surface being measured. Here, 'significance' is intended to refer to size or reflectivity.

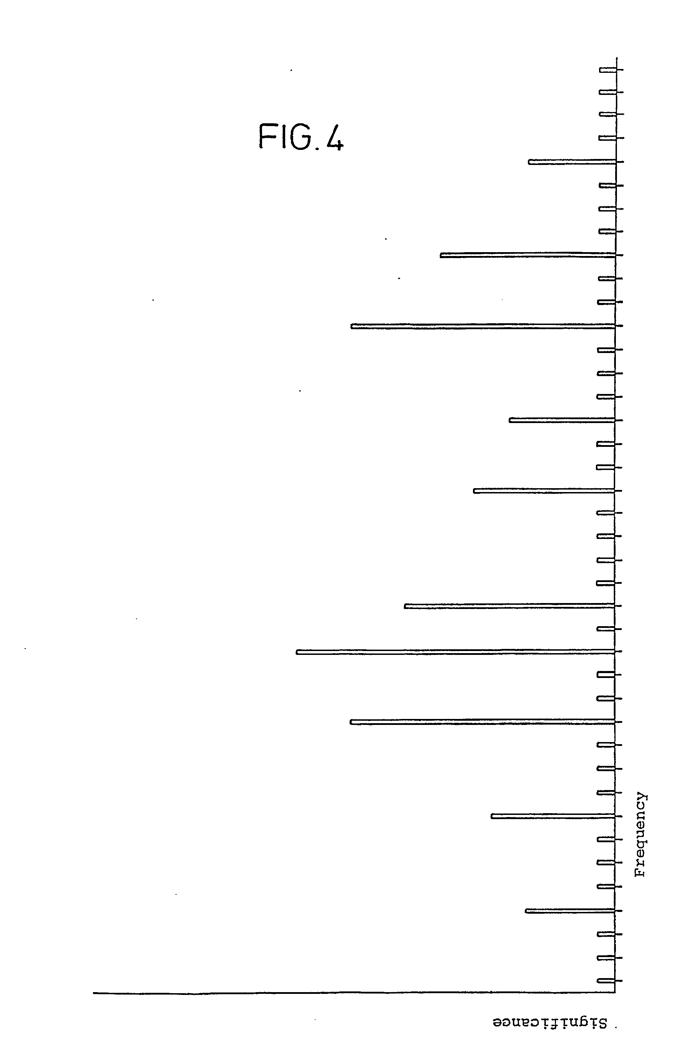

An input search command on bus 27 will specify a minimum and maximum range, within which reflected targets are to be sought, and a range interval to determine resolution. The processor 26 will calculate the corresponding frequency ranges and interval and will cause the filter 23 in the signal path to ramp at a suitable rate between one centre frequency limit and the other. The automatic gain control signal will be examined during the ramping of the search frequency to assess the magnitude and stability of any reflection and a histogram, such as is shown in Figure 4, of each corresponding range measurement may be developed to record a profile of reflective regions in the field of interest and their corresponding significance (reflectivity or magnitude). An appropriate 'read' command may be used to output either an individual range measurement or the complete histogram as required for any particular purpose.

As mentioned earlier, the dynamic range of signals will necessitate the use of an automatic gain control system and there will be a significant propagation delay and corresponding finite zero range frequency in a practical system. The combination of automatic gain control and the programmed filter may introduce a further variable in this delay. It is a straightforward matter using a controlled attenuator such as a wedge filter 32 and/or phase delay in the reference light path (as shown in Figure 3) to derive and store corresponding values of propagation delay and gain for various conditions. This may form a part of a self test or auto-calibration programme, carried out under control of the processor unit. The said values constitute system constants which are stored in memory 31 (as shown in Figure 3) as look-up tables. Data may be withdrawn from memory and used under normal measuring conditions to modify or refine the range measurements.

The filter 23 may comprise any ordinary bandpass filter configuration, the operational components, such as capacitors, being switched in systematic manner in response to a parallel digital bus signal from the processor. A digital filter may be employed as the filter 23.

One important use for the present invention is in a 'warehouse' system remotely controlled or automatic vehicles navigate by comparison with a global model of the warehouse stored in memory. Such systems are known and will not be described in detail. For use in such a system, a range finder according to the invention may be constructed in order to measure ranges from, for example, 0.5 metres to 30 metres in 0.5 metre increments. The corresponding filter frequencies would be selectable over a range of 10cms to 30 metres with allowance for zero range propagation delays. These may be measured and stored for various settings of the light path attenuator covering the range of, for example, 70 decibels in 3 decibel steps. For a subsequent measurement of a simple range, the system may be allowed to settle with a specific setting of the filter 23 and the range derived from a knowledge of the reference frequency for that filter setting, the automatic gain control level and the measured frequency of oscillation.

For example, suppose that under a certain measurement condition the system oscillates at 10.5MHz with an automatic gain control level corresponding to a gain of 20 decibels, the band-pass filter 23 being centered on 10.25 MHz.

From the lookup table, it may be found that at 10.25MHz (and at approximately 10.5MHz) the total delay due to the electronic signal path is 45 nanoseconds, including the delay of the amplifier 21 at a gain of 20 decibels.

Under these conditions, the total delay including the optical path is $(1/10.5) \times 10^{-6}$ seconds which is equal to 95.2 nanoseconds. The additional delay due to the optical path is accordingly 95.2 less 45 which is equal to 50.2 nanoseconds. This corresponds to a total distance of 16.7 metres or a reflecting surface at a range of 8.35 metres.

In general therefore, the transit time for the laser light to reach the target from the detector is given by transit time = (total delay) - (delay in electronic path). The total delay is obtained as the reciprocal of the loop oscillation frequency. The delay in the electronic path depends in general on the oscillation frequency and the gain in the electronic signal path and may be derived and stored for a multiplicity of operating conditions in a calibration routine.

## Claims

1. A range finder system comprising:

a source of substantially monochromatic light, the source being capable of modulation;

a modulator for the said source;

a detector of light from the source;

a signal processing path from the detector to the modulator, the path completing a closed regenerative loop; and

means for detecting the frequency of oscillation of the said closed regenerative loop.

2. A range finder system according to claim 1, further comprising means for deriving the delay at the said frequency of oscillation in the said signal path and for obtaining a transit time for light between the source and the detector in accordance with the difference between the total phase delay around the said loop and the said delay in the signal path.

3. A range finder system according to claim 2 wherein the means for deriving the said delay includes means for providing light substantially directly from the source to the detector.

4. A range finder system according to claim 2 or 3 wherein the said means for deriving the said delay includes means for storing values representing said delay for particular values of the said frequency of oscillation.

5. A range finder system according to claim 4 wherein the said signal path includes an amplifier which has automatic gain control and the said means for storing stores values of a gain control signal.

6. A range finder system according to any foregoing claim and including an optical system for directing light from the source towards a target and for directing light scattered back from the target to the said detector.

7. A range finder system comprising:

a source of substantially monochromatic light, the source being capable of modulation;

a modulator for the said source;

a detector of light from the source;

an optical system for directing light from the source towards a target and for directing light scattered back from the target to the said detector;

a signal processing path from the detector to the modulator, the path completing a closed regenerative loop; and

means for deriving the delay at the said frequency of oscillation in the said signal processing path and for obtaining a transit time for light between the source and the detector in accordance with the difference between the total phase delay around the said loop and the said delay in the signal processing path.

# FIG.1

EP 0 434 191 A2

# FIG.2

FIG.3

FIG.4